(19) Europäisches Patentamt
European Patent Office
Office européen des brevets

(11) **EP 3 904 289 A1**

(12) **EUROPEAN PATENT APPLICATION**
published in accordance with Art. 153(4) EPC

(43) Date of publication:
**03.11.2021 Bulletin 2021/44**

(51) Int Cl.:
*C01F 17/00* (2020.01)    *C04B 35/50* (2006.01)
*H01B 13/00* (2006.01)    *H01M 10/0562* (2010.01)

(21) Application number: **19902747.5**

(22) Date of filing: **26.06.2019**

(86) International application number:
**PCT/JP2019/025439**

(87) International publication number:
**WO 2020/136955 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.12.2018 JP 2018243605**

(71) Applicant: **Panasonic Intellectual Property
Management Co., Ltd.
Osaka-shi, Osaka 540-6207 (JP)**

(72) Inventors:
• **NISHIO, Yusuke**
  **Osaka-shi, Osaka 540-6207 (JP)**
• **KUBO, Takashi**
  **Osaka-shi, Osaka 540-6207 (JP)**
• **SAKAI, Akihiro**
  **Osaka-shi, Osaka 540-6207 (JP)**
• **MIYAZAKI, Akinobu**
  **Osaka-shi, Osaka 540-6207 (JP)**

(74) Representative: **Grünecker Patent- und
Rechtsanwälte
PartG mbB
Leopoldstraße 4
80802 München (DE)**

(54) **METHOD FOR PRODUCING HALIDE**

(57)    A production method for producing a halide according to the present disclosure includes a heat-treatment step of heat-treating, in an inert gas atmosphere, a mixed material in which LiBr and $YBr_3$ are mixed. In the heat-treatment step, the mixed material is heat-treated at higher than or equal to 200°C and lower than or equal to 650°C.

FIG. 1

EP 3 904 289 A1

**Description**

Technical Field

The present invention relates to a production method for producing a halide.

Background Art

PTL 1 discloses a production method for producing a halide solid electrolyte.

Citation List

Patent Literature

PTL 1: International Publication No. 2018/025582

Summary of Invention

Technical Problem

In existing technology, it is desired to produce a halide by a method having industrially high productivity.

Solution to Problem

A production method for producing a halide according to an aspect of the present disclosure includes a heat-treatment step of heat-treating, in an inert gas atmosphere, a mixed material in which LiBr and $YBr_3$ are mixed, and in the heat-treatment step, the mixed material is heat-treated at higher than or equal to 200°C and lower than or equal to 650°C.

Advantageous Effects of Invention

According to the present disclosure, a halide can be produced by a method having industrially high productivity.

Brief Description of Drawings

[Fig. 1] Fig. 1 is a flowchart showing an example of a production method in Embodiment 1.
[Fig. 2] Fig. 2 is a flowchart showing an example of the production method in Embodiment 1.
[Fig. 3] Fig. 3 is a flowchart showing an example of the production method in Embodiment 1.
[Fig. 4] Fig. 4 is a schematic diagram showing a method for evaluating ionic conductivity.
[Fig. 5] Fig. 5 is a graph showing the results of evaluation of ionic conductivity by AC impedance measurement.

Description of Embodiments

Embodiments will be described below with reference to the drawings.

(Embodiment 1)

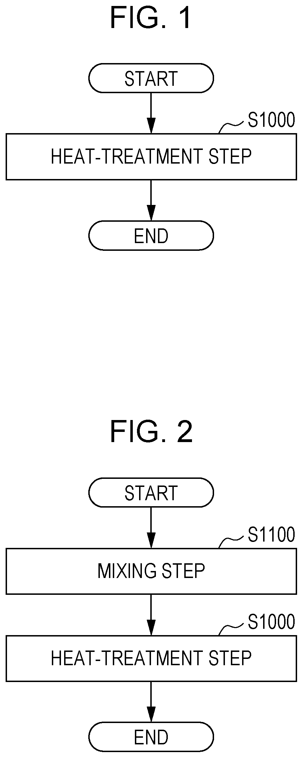

Fig. 1 is a flowchart showing an example of a production method in Embodiment 1. A production method in Embodiment 1 includes a heat-treatment step S1000. The heat-treatment step S1000 is a step of heat-treating a mixed material in an inert gas atmosphere. The mixed material heat-treated in the heat-treatment step S1000 is a material in which LiBr (i.e., lithium bromide) and $YBr_3$ (i.e., yttrium bromide) are mixed. In the heat-treatment step S1000, the mixed material is heat-treated at higher than or equal to 200°C and lower than or equal to 650°C.

According to the structure described above, a halide can be produced by a method having industrially high productivity (e.g., a method enabling low-cost mass production). That is, without using a vacuum-sealed tube and a planetary ball mill, a bromide containing Li (i.e., lithium) and Y (i.e., yttrium) can be produced by a simple and easy production method (i.e., heat-treatment in an inert gas atmosphere).

In the heat-treatment step S1000, for example, powder of the mixed material may be placed in a container (e.g., a crucible) and heat-treated in a heating furnace. In this case, the state in which the mixed material is heated to a temperature of "higher than or equal to 200°C and lower than or equal to 650°C" in an inert gas atmosphere may be held for more than or equal to a predetermined time. Furthermore, the heat-treatment time may be a time period that does not cause a compositional change of a heat-treated product due to volatilization of a halide or the like (i.e., does not impair the ionic conductivity of the heat-treated product).

Note that as the inert gas, helium, nitrogen, argon, or the like can be used.

Furthermore, after the heat-treatment step S1000, the heat-treated product may be taken out of the container (e.g., a crucible) and pulverized. In this case, the heat-treated product may be pulverized with a pulverizing apparatus (e.g., a mortar, mixer, or the like).

Furthermore, the mixed material in the present disclosure may be a material in which only two materials, i.e., $LiBr$ and $YBr_3$, are mixed. Alternatively, the mixed material in the present disclosure may be further mixed with another material different from $LiBr$ or $YBr_3$, in addition to $LiBr$ and $YBr_3$.

Furthermore, in the present disclosure, the mixed material may be further mixed with $M_\alpha A_\beta$, where M includes at least one element selected from the group consisting of Na, K, Ca, Mg, Sr, Ba, Zn, In, Sn, Bi, La, Ce, Pr, Nd, Pm, Sm, Eu, Gd, Tb, Dy, Ho, Er, Tm, Yb, and Lu; A is at least one element selected from the group consisting of Cl, Br, and I; and $\alpha > 0$ and $\beta > 0$ are satisfied.

According to the structure described above, it is possible to improve the properties (e.g., ionic conductivity and the like) of a halide produced by the production method of the present disclosure.

Note that, when "$\alpha = 1$", "$2 \leq \beta \leq 5$" may be satisfied.

Furthermore, in the present disclosure, the mixed material may be further mixed with at least one of $LiF$ or $YF_3$.

According to the structure described above, it is possible to improve the properties (e.g., ionic conductivity and the like) of a halide produced by the production method of the present disclosure.

Furthermore, in the present disclosure, the mixed material may be mixed with a material in which a part of Li in $LiBr$ (or a part of Y in $YBr_3$) is replaced with substituting cation species (e.g., M described above). Furthermore, the mixed material may be mixed with a material in which a part of Br in $LiBr$ (or a part of Br in $YBr_3$) is replaced with F (i.e., fluorine).

Fig. 2 is a flowchart showing an example of the production method in Embodiment 1. As shown in Fig. 2, the production method in Embodiment 1 may further include a mixing step S1100.

The mixing step S1100 is a step carried out before the heat-treatment step S1000.

In the mixing step S1100, a mixed material (i.e., a material to be heat-treated in the heat-treatment step S1000) is obtained by mixing $LiBr$ and $YBr_3$ serving as starting materials.

In the mixing step S1100, $LiBr$ and $YBr_3$ may be weighed so as to have a desired molar ratio and mixed. As the mixing method for mixing the starting materials, a method in which a commonly known mixing apparatus (e.g., a mortar, blender, ball mill, or the like) is used may be employed. For example, in the mixing step S1100, powders of the starting materials may be prepared and mixed. In this case, in the heat-treatment step S1000, a mixed material in the form of powder may be heat-treated. Furthermore, the mixed material in the form of powder obtained in the mixing step S1100 may be shaped into pellets by uniaxial pressing. In this case, in the heat-treatment step S1000, by heat-treating the mixed material in the form of pellets, a halide may be produced.

Furthermore, in the mixing step S1100, a mixed material may be obtained by mixing, in addition to $LiBr$ and $YBr_3$, another starting material different from $LiBr$ or $YBr_3$ (e.g., $M_\alpha A_\beta$, $LiF$, $YF_3$, or the like described above).

Note that in the mixing step S1100, a mixed material may be obtained by mixing "a starting material containing $LiBr$ as a main component" and "a starting material containing $YBr_3$ as a main component".

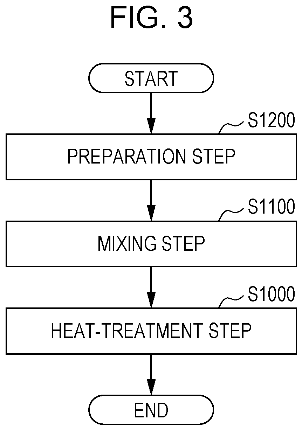

Fig. 3 is a flowchart showing an example of the production method in Embodiment 1. As shown in Fig. 3, the production method in Embodiment 1 may further include a preparation step S1200.

The preparation step S1200 is a step carried out before the mixing step S1100.

In the preparation step S1200, starting materials such as $LiBr$ and $YBr_3$ (i.e., materials to be mixed in the mixing step S1100) are prepared.

In the preparation step S1200, starting materials such as $LiBr$ and $YBr_3$ may be obtained by synthesizing materials. Alternatively, in the preparation step S1200, commonly known, commercially available products (e.g., materials with a purity of greater than or equal to 99%) may be used. Note that dry materials may be used as the starting materials. Furthermore, starting materials in the form of crystals, aggregates, flakes, powder, or the like may be used as the staring materials. In the preparation step S1200, starting materials in the form of powder may be obtained by pulverizing starting materials in the form of crystals, aggregates, or flakes.

In the preparation step S1200, any one or two or more of $M_\alpha A_\beta$ (where M is at least one element selected from the group consisting of Na, K, Ca, Mg, Sr, Ba, Zn, In, Sn, Bi, La, Ce, Pr, Nd, Pm, Sm, Eu, Gd, Tb, Dy, Ho, Er, Tm, Yb, and Lu; A is at least one element selected from the group consisting of Cl, Br, and I; and when "$\alpha = 1$", "$2 \leq \beta \leq 5$" is satisfied), $LiF$, and $YF_3$ may be added. In this way, it is possible to improve the properties (e.g., ionic conductivity and the like) of a halide obtained by the production method of the present disclosure.

Note that in the preparation step S1200, a starting material in which a part of Li in LiBr (or a part of Y in YBr$_3$) is replaced with substituting cation species (e.g., M described above) may be prepared. Furthermore, in the preparation step S1200, a starting material in which a part of Br in LiBr (or a part of Br in YBr$_3$) is replaced with F (i.e., fluorine) may be prepared.

Note that the halide produced by the production method of the present disclosure can be used as a solid electrolyte material. In this case, the solid electrolyte material may be, for example, a solid electrolyte having lithium ion conductivity. In this case, the solid electrolyte material can be used, for example, as a solid electrolyte material used in all-solid-state lithium secondary batteries.

(Embodiment 2)

Embodiment 2 will be described below. Descriptions that are duplicate of those in Embodiment 1 will be omitted appropriately.

A production method in Embodiment 2 has the following feature in addition to the feature of the production method in Embodiment 1 described above.

In the heat-treatment step S1000 of the production method in Embodiment 2, the mixed material in which LiBr and YBr$_3$ are mixed is heat-treated at higher than or equal to 300°C and lower than or equal to 600°C.

According to the structure described above, a bromide having high ionic conductivity can be produced by a method having industrially high productivity. That is, by setting the heat-treatment temperature to be higher than or equal to 300°C, LiBr and YBr$_3$ are allowed to react with each other sufficiently. Furthermore, by setting the heat-treatment temperature to be lower than or equal to 600°C, it is possible to suppress thermal decomposition of a bromide formed by a solid phase reaction. Thus, the ionic conductivity of a bromide, which is a heat-treated product, can be further enhanced. That is, for example, a high-quality bromide solid electrolyte can be obtained.

Furthermore, in the heat-treatment step S1000 of the production method in Embodiment 2, the mixed material may be heat-treated at higher than or equal to 400°C (e.g., higher than or equal to 400°C and lower than or equal to 600°C).

According to the structure described above, a bromide having higher ionic conductivity can be produced by a method having industrially high productivity. That is, by setting the heat-treatment temperature to be higher than or equal to 400°C, the crystallinity of a bromide, which is a heat-treated product, can be further enhanced. Thus, the ionic conductivity of a bromide, which is a heat-treated product, can be further enhanced. That is, for example, a higher-quality bromide solid electrolyte can be obtained.

Furthermore, in the heat-treatment step S1000 of the production method in Embodiment 2, the mixed material may be heat-treated at higher than or equal to 500°C (e.g., higher than or equal to 500°C and lower than or equal to 600°C).

According to the structure described above, a bromide having higher ionic conductivity can be produced by a method having industrially high productivity. That is, by setting the heat-treatment temperature to be higher than or equal to 500°C, the crystallinity of a bromide, which is a heat-treated product, can be further enhanced. Thus, the ionic conductivity of a bromide, which is a heat-treated product, can be further enhanced. That is, for example, a higher-quality bromide solid electrolyte can be obtained.

Furthermore, in the heat-treatment step S1000 of the production method in Embodiment 2, the mixed material may be heat-treated at lower than or equal to 550°C (e.g., higher than or equal to 300°C and lower than or equal to 550°C, higher than or equal to 400°C and lower than or equal to 550°C, or higher than or equal to 500°C and lower than or equal to 550°C).

According to the structure described above, a bromide having higher ionic conductivity can be produced by a method having industrially high productivity. That is, by setting the heat-treatment temperature to be lower than or equal to 550°C, heat-treatment can be performed at a temperature equal to or lower than the melting point of LiBr (i.e., 550°C), and decomposition of LiBr can be suppressed. Thus, the ionic conductivity of a bromide, which is a heat-treated product, can be further enhanced. That is, for example, a higher-quality bromide solid electrolyte can be obtained.

Furthermore, in the heat-treatment step S1000 of the production method in Embodiment 2, the mixed material may be heat-treated for more than or equal to 1 hour and less than or equal to 60 hours.

According to the structure described above, a bromide having higher ionic conductivity can be produced by a method having industrially high productivity. That is, by setting the heat-treatment time to be more than or equal to 1 hour, LiBr and YBr$_3$ are allowed to react with each other sufficiently. Furthermore, by setting the heat-treatment time to be less than or equal to 60 hours, volatilization of a bromide, which is a heat-treated product, can be suppressed, and it is possible to obtain a bromide having a desired compositional ratio of constituent elements (i.e., a compositional change can be suppressed). Thus, the ionic conductivity of a bromide, which is a heat-treated product, can be further enhanced. That is, for example, a higher-quality bromide solid electrolyte can be obtained.

Furthermore, in the heat-treatment step S1000 of the production method in Embodiment 2, the mixed material may be heat-treated for less than or equal to 24 hours (e.g., more than or equal to 1 hour and less than or equal to 24 hours).

According to the structure described above, by setting the heat-treatment time to be less than or equal to 24 hours, volatilization of a bromide, which is a heat-treated product, can be further suppressed, and it is possible to obtain a bromide having a desired compositional ratio of constituent elements (i.e., a compositional change can be suppressed). Thus, it is possible to further suppress a decrease in the ionic conductivity of a bromide, which is a heat-treated product, due to a compositional change.

Furthermore, in the heat-treatment step S1000 of the production method in Embodiment 2, the mixed material may be heat-treated for less than or equal to 10 hours (e.g., more than or equal to 1 hour and less than or equal to 10 hours).

According to the structure described above, by setting the heat-treatment time to be less than or equal to 10 hours, volatilization of a bromide, which is a heat-treated product, can be further suppressed, and it is possible to obtain a bromide having a desired compositional ratio of constituent elements (i.e., a compositional change can be suppressed). Thus, it is possible to further suppress a decrease in the ionic conductivity of a bromide, which is a heat-treated product, due to a compositional change.

Furthermore, in the mixing step S1100 of the production method in Embodiment 2, the mixing molar ratio of LiBr to $YBr_3$ may be adjusted by weighing LiBr and $YBr_3$ so as to have a desired molar ratio, followed by mixing.

For example, in Embodiment 2, LiBr and $YBr_3$ may be mixed at a molar ratio of LiBr:$YBr_3$ = "3.75:0.75" to "1.5:1.5".

Furthermore, in the mixing step S1100 of the production method in Embodiment 2, the mixed material may be obtained by further mixing $M_\alpha Br_\beta$ (i.e., a compound represented by $M_\alpha A_\beta$ in Embodiment 1 where "A" is Br), in addition to LiBr and $YBr_3$. In this case, in the preparation step S1200 of the production method in Embodiment 2, the $M_\alpha Br_\beta$ may be prepared as a starting material.

(Examples)

Details of the present disclosure will be described below using examples and a reference example. These are merely exemplary and do not limit the present disclosure.

In the following examples, halides produced by a production method according to the present disclosure are produced as solid electrolyte materials and evaluated.

<Example 1>

(Production of solid electrolyte material)

In an argon atmosphere with a dew point of lower than or equal to -60°C, LiBr and $YBr_3$ were weighed so as to satisfy a molar ratio of LiBr:$YBr_3$ = 3:1. These materials were pulverized and mixed with a mortar made of agate. The resulting mixture was placed in a crucible made of alumina, heated to 600°C in an argon atmosphere, and held for one hour. After heat-treatment, the material was pulverized with a mortar made of agate to produce a solid electrolyte material of Example 1.

(Evaluation of ionic conductivity)

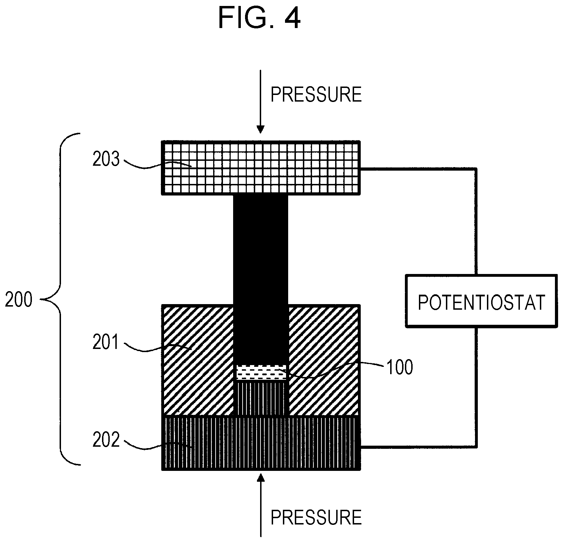

Fig. 4 is a schematic diagram showing a method for evaluating ionic conductivity. A pressure-molding die 200 includes a die 201 which is made of electronically insulating polycarbonate, and an upper punch 203 and a lower punch 202 which are made of electronically conductive stainless steel.

Ionic conductivity was evaluated by the following method using the structure shown in Fig. 4.

In a dry atmosphere with a dew point of lower than or equal to -60°C, the pressure-molding die 200 was filled with solid electrolyte powder 100, which is powder of the solid electrolyte material of Example 1, and uniaxial pressing was performed at 300 MPa to produce a conductivity measurement cell of Example 1.

In the pressurized state, lead wires were extended from the upper punch 203 and the lower punch 202 and connected to a potentiostat (Princeton Applied Research, VersaSTAT4) equipped with a frequency response analyzer. The ionic conductivity at room temperature was measured by an electrochemical impedance measurement method.

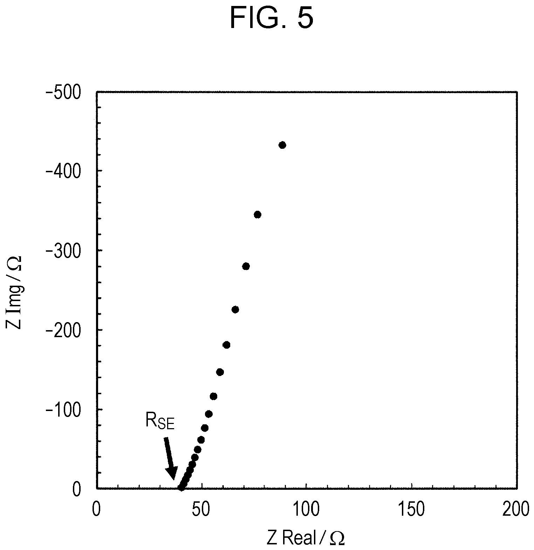

Fig. 5 is a graph showing the results of evaluation of ionic conductivity by AC impedance measurement. Fig. 5 shows a Cole-Cole diagram of the impedance measurement results.

In Fig. 5, the value of the real part of the impedance at the measurement point (indicated by an arrow in Fig. 5) having the smallest absolute value of the phase of the complex impedance was considered as a resistance value for the ionic conduction of the solid electrolyte of Example 1. The ionic conductivity was calculated from the following formula (1) using the resistance value of the electrolyte.

$$\sigma = (R_{SE} \times S/t)^{-1} \cdots (1)$$

In the formula (1), $\sigma$ is the ionic conductivity, S is the area of the electrolyte (in Fig. 4, the inside diameter of the die 201), $R_{SE}$ is the resistance value of the solid electrolyte in the above-mentioned impedance measurement, and t is the thickness of the electrolyte (in Fig. 4, the thickness of the solid electrolyte powder 100).

The ionic conductivity of the solid electrolyte material of Example 1 measured at 25°C was $1.5 \times 10^{-3}$ S/cm.

<Examples 2 to 21>

(Production of solid electrolyte material)

In Examples 2 to 19, as in Example 1, in an argon atmosphere with a dew point of lower than or equal to -60°C, LiBr and $YBr_3$ were weighed so as to satisfy a molar ratio of $LiBr:YBr_3 = 3:1$.

In Example 20, in an argon atmosphere with a dew point of lower than or equal to -60°C, LiBr and $YBr_3$ were weighed so as to satisfy $LiBr:YBr_3 = 3.75:0.75$.

In Example 21, in an argon atmosphere with a dew point of lower than or equal to -60°C, LiBr and $YBr_3$ were weighed so as to satisfy $LiBr:YBr_3 = 1.5:1.5$.

These materials were pulverized and mixed with a mortar made of agate. The resulting mixture was placed in a crucible made of alumina, heated to 300 to 600°C in an argon atmosphere, and held for 1 to 60 hours. In each Example, the "intended composition", "heat-treatment temperature", and "heat-treatment time" are shown in Table 1 below.

After heat-treatment under the corresponding heat-treatment conditions, pulverization was performed with a mortar made of agate to produce a solid electrolyte material of each of Examples 2 to 21.

(Evaluation of ionic conductivity)

By the same method as that of Example 1 described above, a conductivity measurement cell of each of Examples 2 to 21 was produced, and measurement of ionic conductivity was performed.

<Reference Example 1>

(Production of solid electrolyte material)

In Reference Example 1, in an argon atmosphere with a dew point of lower than or equal to -60°C, LiBr and $YBR_3$ were weighed so as to satisfy a molar ratio of $LiBr:YBr_3 = 3:1$. These materials were pulverized and mixed with a mortar made of agate. The resulting mixture was placed in a crucible made of alumina, heated to 200°C in an argon atmosphere, and held for one hour. After heat-treatment, the material was pulverized with a mortar made of agate to produce a solid electrolyte material of Reference Example 1.

(Evaluation of ionic conductivity)

By the same method as that of Example 1 described above, a conductivity measurement cell of Reference Example 1 was produced, and measurement of ionic conductivity was performed.

The compositions and the evaluation results in Examples 1 to 21 and Reference Example 1 are shown in Table 1.

[Table 1]

| | Molar mixing ratio of starting materials | | Composition | Heat-treatment temperature (°C) | Heat-treatment time (hr) | Conductivity (S·cm$^{-1}$) |
|---|---|---|---|---|---|---|
| | LiBr | YBr3 | | | | |
| Example 1 | 3 | 1 | $Li_3YBr_6$ | 600 | 1 | $1.5 \times 10^{-3}$ |
| Example 2 | 3 | 1 | $Li_3YBr_6$ | 600 | 15 | $1.3 \times 10^{-3}$ |
| Example 3 | 3 | 1 | $Li_3YBr_6$ | 550 | 1 | $1.3 \times 10^{-3}$ |
| Example 4 | 3 | 1 | $Li_3YBr_6$ | 520 | 1 | $1.1 \times 10^{-3}$ |
| Example 5 | 3 | 1 | $Li_3YBr_6$ | 520 | 5 | $9.3 \times 10^{-4}$ |
| Example 6 | 3 | 1 | $Li_3YBr_6$ | 520 | 10 | $1.2 \times 10^{-3}$ |
| Example 7 | 3 | 1 | $Li_3YBr_6$ | 520 | 15 | $1.2 \times 10^{-3}$ |

(continued)

| | Molar mixing ratio of starting materials | | Composition | Heat-treatment temperature (°C) | Heat-treatment time (hr) | Conductivity (S·cm⁻¹) |
|---|---|---|---|---|---|---|
| | LiBr | YBr3 | | | | |
| Example 8 | 3 | 1 | $Li_3YBr_6$ | 520 | 24 | $1.3 \times 10^{-3}$ |
| Example 9 | 3 | 1 | $Li_3YBr_6$ | 500 | 1 | $8.4 \times 10^{-4}$ |
| Example 10 | 3 | 1 | $Li_3YBr_6$ | 500 | 10 | $1.5 \times 10^{-3}$ |
| Example 11 | 3 | 1 | $Li_3YBr_6$ | 500 | 60 | $5.6 \times 10^{-4}$ |
| Example 12 | 3 | 1 | $Li_3YBr_6$ | 450 | 1 | $2.4 \times 10^{-4}$ |
| Example 13 | 3 | 1 | $Li_3YBr_6$ | 450 | 10 | $9.6 \times 10^{-4}$ |
| Example 14 | 3 | 1 | $Li_3YBr_6$ | 400 | 1 | $5.5 \times 10^{-5}$ |
| Example 15 | 3 | 1 | $Li_3YBr_6$ | 400 | 10 | $1.1 \times 10^{-4}$ |
| Example 16 | 3 | 1 | $Li_3YBr_6$ | 400 | 24 | $4.0 \times 10^{-4}$ |
| Example 17 | 3 | 1 | $Li_3YBr_6$ | 400 | 60 | $6.9 \times 10^{-4}$ |
| Example 18 | 3 | 1 | $Li_3YBr_6$ | 350 | 1 | $3.8 \times 10^{-5}$ |
| Example 19 | 3 | 1 | $Li_3YBr_6$ | 300 | 1 | $4.2 \times 10^{-5}$ |
| Example 20 | 3.75 | 0.75 | $Li_{3.75}Y_{0.75}Br_6$ | 500 | 10 | $7.1 \times 10^{-4}$ |
| Example 21 | 1.5 | 1.5 | $Li_{1.5}Y_{1.5}Br_6$ | 500 | 10 | $5.7 \times 10^{-5}$ |
| Reference Example 1 | 3 | 1 | $Li_3YBr_6$ | 200 | 1 | $4.7 \times 10^{-6}$ |

<Considerations>

As in Reference Example 1, in the case where the heat-treatment temperature is 200°C, the ionic conductivity at around room temperature is low at $4.7 \times 10^{-6}$ S/cm. The reason for this is considered to be that in the case where the heat-treatment temperature is 200°C, the solid phase reaction is insufficient. In contrast, in Examples 1 to 21, the ionic conductivity at around room temperature is high at more than or equal to $3.8 \times 10^{-5}$ S/cm.

In the case where the heat-treatment temperature is in the range of 400 to 600°C, a higher ionic conductivity is exhibited. Furthermore, in the case where the heat-treatment temperature is in the range of 500 to 600°C, a much higher ionic conductivity is exhibited. The reason for these is considered to be that a solid electrolyte having high crystallinity has been achieved.

From the above results, it is evident that the solid electrolyte material synthesized by the production method according to the present disclosure has high lithium ion conductivity. Furthermore, the production method according to the present disclosure is a simple and easy method and a method having industrially high productivity.

Industrial Applicability

The production method according to the present disclosure can be used, for example, as a production method for producing a solid electrolyte material. Furthermore, the solid electrolyte material produced by the production method according to the present disclosure can be used, for example, in all-solid-state lithium secondary batteries.

Reference Signs List

100 solid electrolyte powder
200 pressure-molding die
201 die
202 lower punch

203    upper punch

**Claims**

1.  A production method for producing a halide comprising a heat-treatment step of heat-treating, in an inert gas atmosphere, a mixed material in which LiBr and $YBr_3$ are mixed,
    wherein, in the heat-treatment step, the mixed material is heat-treated at higher than or equal to 200°C and lower than or equal to 650°C.

2.  The production method according to Claim 1, wherein, in the heat-treatment step, the mixed material is heat-treated at higher than or equal to 300°C and lower than or equal to 600°C.

3.  The production method according to Claim 2, wherein, in the heat-treatment step, the mixed material is heat-treated at higher than or equal to 400°C.

4.  The production method according to Claim 3, wherein, in the heat-treatment step, the mixed material is heat-treated at higher than or equal to 500°C.

5.  The production method according to any one of Claims 2 to 4, wherein, in the heat-treatment step, the mixed material is heat-treated at lower than or equal to 550°C.

6.  The production method according to any one of Claims 1 to 5, wherein, in the heat-treatment step, the mixed material is heat-treated for more than or equal to 1 hour and less than or equal to 60 hours.

7.  The production method according to Claim 6, wherein, in the heat-treatment step, the mixed material is heat-treated for less than or equal to 24 hours.

8.  The production method according to Claim 7, wherein, in the heat-treatment step, the mixed material is heat-treated for less than or equal to 10 hours.

9.  The production method according to any one of Claims 1 to 8, wherein the mixed material is further mixed with $M_\alpha A_\beta$, where M includes at least one element selected from the group consisting of Na, K, Ca, Mg, Sr, Ba, Zn, In, Sn, Bi, La, Ce, Pr, Nd, Pm, Sm, Eu, Gd, Tb, Dy, Ho, Er, Tm, Yb, and Lu;
    A is at least one element selected from the group consisting of Cl, Br, and I; and
    $\alpha > 0$ and $\beta > 0$ are satisfied.

10. The production method according to any one of Claims 1 to 9, wherein the mixed material is further mixed with at least one of LiF or $YF_3$.

# FIG. 1

```
          START
            │
            ▼                    ⌒S1000
┌───────────────────────────┐
│   HEAT-TREATMENT STEP      │
└───────────────────────────┘
            │
            ▼
           END
```

# FIG. 2

```
          START
            │
            ▼                    ⌒S1100
┌───────────────────────────┐
│       MIXING STEP          │
└───────────────────────────┘
            │
            ▼                    ⌒S1000
┌───────────────────────────┐
│   HEAT-TREATMENT STEP      │
└───────────────────────────┘
            │
            ▼
           END
```

# FIG. 3

```
        ┌─────────────┐
        │    START    │
        └─────────────┘
               │
               ▼            ～S1200
    ┌─────────────────────────┐
    │    PREPARATION STEP      │
    └─────────────────────────┘
               │
               ▼            ～S1100
    ┌─────────────────────────┐
    │      MIXING STEP         │
    └─────────────────────────┘
               │
               ▼            ～S1000
    ┌─────────────────────────┐
    │   HEAT-TREATMENT STEP    │
    └─────────────────────────┘
               │
               ▼
        ┌─────────────┐
        │     END     │
        └─────────────┘
```

# FIG. 4

## FIG. 5

## INTERNATIONAL SEARCH REPORT

| International application No. |
| --- |
| PCT/JP2019/025439 |

**A. CLASSIFICATION OF SUBJECT MATTER**
Int.Cl. C01F17/00(2006.01)i, C04B35/50(2006.01)i, H01B13/00(2006.01)i, H01M10/0562(2010.01)n

According to International Patent Classification (IPC) or to both national classification and IPC

**B. FIELDS SEARCHED**

Minimum documentation searched (classification system followed by classification symbols)
Int.Cl. C01F17/00, C04B35/50, H01B13/00, H01M10/0562

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)
CAplus/REGISTRY(STN), JSTPlus(JDreamIII), JST7580(JDreamIII), JSTChina(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| Y | BOHNSACK, A. et al., Ternary halides of the $A_3MX_6$ type. VII. The bromides of $Li_3MBr_6$ (M=Sm-Lu, Y): synthesis, crystal structure, and ionic mobility, Zeitschrift fur Anorganische und Allgemeine Chemie, September 1997, vol. 623, pp. 1352-1356, ISSN 0044-2313, particularly, "abstract", "experimentelles", tabelle 2 | 1-10 |

☒ Further documents are listed in the continuation of Box C.　　☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 13.09.2019 | 01.10.2019 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/025439 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2018/025582 A1 (PANASONIC INTELLECTUAL PROPERTY MANAGEMENT CO., LTD.) 08 February 2018, claims, paragraphs [0140]-[0143], [0183]-[0186] & US 2019/088995 A1, paragraphs [0151]-[0154], [0194]-[0197], claims & EP 3496202 A1 & CN 108701860 A | 1-10 |
| Y<br>A | US 2011/0272585 A1 (YANG, K.) 10 November 2011, paragraph [0025], claims & US 2011/0272586 A1 & US 2012/0273726 A1 & EP 2386618 A2 & EP 2386620 A1 & EP 2387040 A2 & CN 102295931 A & CN 106433645 A & CN 102286286 A & CN 102277170 A | 9, 10<br>1-8 |
| Y<br>A | CN 108004591 A (DAZHOU LIZHI ENVIRONMENTAL PROTECTION TECH CO., LTD.) 08 May 2018, claims, paragraph [0029]<br>(Family: none) | 9, 10<br>1-8 |
| Y<br>A | JP 2016-522135 A (SAINT-GOBAIN CRISTAUX ET DETECTEURS) 28 July 2016, claims, paragraph [0034] & US 2016/0103232 A1, paragraph [0062], claims & US 2017/0139059 A1 & US 2018/0246230 A1 & US 2019/0107636 A1 & WO 2014/167262 A1 & EP 2984213 A1 & FR 3004467 A1 & CN 105102693 A | 9, 10<br>1-8 |
| A | STEINER, H. J. et al., Novel fast ion conductors of the type $M^I_3 M^{III}Cl_6$ ($M^I$=Li, Na, Ag; $M^{III}$=In, Y), Zeitschrift fur Anorganische und Allgemeine Chemie, July 1992, vol. 613, pp. 26-30, ISSN 0044-2313, particularly, "abstract", "2 Darstellung der praparate", "4 Rontgenographische untersuchungen" | 1-10 |
| A | BOHNSACK, A. et al., Ternary halides of the $A_3MX_6$ type. VI. Ternary chlorides of the rare-earth elements with lithium, $Li_3MCl_6$ (M=Tb-Lu, Y, Sc): synthesis, crystal structures, and ionic motion, Zeitschrift fur Anorganische und Allgemeine Chemie, July 1997, vol. 623, pp. 1067-1073, ISSN 0044-2313, particularly, "abstract", "experimentelles", tabelle 1 | 1-10 |
| A | ASANO, T. et al., Solid halide electrolytes with high lithium-ion conductivity for application in 4V class bulk-type all-solid-state batteries, advanced materials, 02 November 2018, vol. 30, no. 44, p. 1803075, ISSN 0935-9648, particularly, "experimental section" | 1-10 |
| A | CN 105254184 A (NINGBO UNIVERSITY) 20 January 2016, claims, examples<br>(Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018025582 A